# EUROPEAN PATENT APPLICATION

(11) **EP 4 236 404 A1**
(43) Date of publication of application: **30.08.2023**
(21) Application number: 22305199.6
(22) Date of filing: 23.02.2022
(51) Int. Cl.: H04W 8/06

(54) **METHOD TO MANAGE NATIONAL ROAMING IN DISASTER SITUATION**

(71) Applicant: THALES DIS AIS DEUTSCHLAND GMBH, 81541 München (DE)
(72) Inventor: BREUER, Volker, 16727 BOETZOW (DE); DEMARTY, Joël, 35520 MONTREUIL LE GAST (FR)

(57) **Abstract**

The present invention relates to a method to manage national roaming in disaster situation, said method comprising the steps of, for the user equipment, when an outage of the home PLMN is detected:
- scanning supported frequency domain to find an active base station, whatever is the PLMN,
- sending to a remote provisioning service server, using said active base station, a message comprising a bootstrapping credential with a disaster situation indication for being provisioned with credentials,
- receiving in return, from the remote provisioning service server, a temporary disaster identifier for a visitor national PLMN,
- using the temporary disaster identifier, connecting to the visitor national PLMN.

## Description

### FIELD OF THE INVENTION

The present invention relates to a method, for a user equipment previously connected to a base station of a Home PLMN where the user has a registration, to manage national roaming in disaster situation. It also relates to a user equipment, UE in the following, implementing this method.

The invention also pertains to a method, for a remote provisioning service server, to manage national roaming of users equipment registered at a registered Home PLMN in disaster situation. The invention also relates to a remote provisioning service server, RPS in the following, implementing this last method.

### BACKGROUND OF THE INVENTION

A UE in disaster situation will lose its connection to its HPLMN or the currently serving PLMN. The problem occurs when said network is for longer time in outage and the UE only finds other national networks for which it has no valid set of credentials or which with respect to previous HPLMN are on the forbidden list.

Hence, the device remains without connection and is OOO in said disaster situation. Depending on the use case of the device, especially in case of medical or health care, this may lead to tremendous drawbacks, including not connecting even though connection via a different network would be possible.

National roaming is a topic gaining more and more interest and hence was also treated in 3GPP in context of Rel.-17. A standardized solution has some benefits but especially in this case also has the drawback of availability.

In 3GPP national roaming is standardized for 5G-NR in Rel.-17. The standardized solution is available when the networks home and visited PLMN are both at least upgraded to Rel.-17 and both have a 5G NR standalone architecture. It means that a UE must be connected to 5G Ran node, typically to receive broadcast indications, and that the 5G core must be available in both PLMNs to master and orchestrate the respective indications.

Rel.-17 will be finalized by mid-2022 since when all networks will be upgraded to 5G-standalone is not clear and no migration plan is available. Giving the deployment strategy of operators to first go for 5G in urban and dense urban areas, it is very likely that rural areas will be the last once to be upgraded to 5G standalone if ever. This is however locations where disaster situation, especially natural ones, can of course occur.

Giving all these side conditions, i.e. the necessity to be 5G standalone for home and visited network and the necessity for network and terminals to be compliant with at least Rel.-17, the national roaming will not be feasible. This is a situation which will be effective for at least next 15 years and there may still be devices or areas not complying to these pre-conditions.

As prior art the current CT1 status of discussion shows that the standards solution will solve the situation via roaming allowance, means maintaining current identity and being granted access/indicated to a new PLMN, the so called v-PLMN.

Especially CT1 C1-214187 Discussion on system information extensions for MINT provides an overview on state of discussion in CT1.

### 8.1 Conclusions on Key Issue #1

A solution which informs the UE about Disaster Condition over 3GPP access; and with minimal information broadcast over 3GPP access of a PLMN offering disaster roaming to UEs of a PLMN with Disaster Condition, sufficient to enable the UEs to determine that a Disaster Condition applies to the PLMN with Disaster Condition; shall be progressed in normative phase.

In the area where a PLMN can provide normal services to a UE, this PLMN is not considered as a PLMN with Disaster Condition in that area for that UE.

### 8.3 Conclusions on Key Issue #3

For Key Issue#3, the following aspects are concluded: PLMN offering disaster roaming shall indicate accessibility for disaster roamers through SIB messages. The indication may contain the list of PLMN(s) with Disaster condition for which disaster roaming is offered. Also UE of PLMN D with Disaster Condition shall determine that PLMN A offers disaster roaming when PLMN A's NG-RAN cell broadcasts PLMN ID of PLMN D in the list of PLMN(s) with Disaster Condition for which disaster roaming is offered by PLMN A. In parallel, the design of the SIB messages is defined by RAN WG2. It means CT1 has agreed that a network which offers disaster roaming shall indicate this accordingly, and PLMN can be stored or updated.

However as outlined above, national roaming only helps in case of prior serving and visited PLMN as also the device are at least Rel.-17 or higher, which will take years and leaves all equipped applications behind which may be brought in the field with pre-Rel.-17 devices and remain there for years.

The table below depicts how the intended standard solution in Rel.-17 for 5G standalone networks may work depending on what is deployed/used depending on Release and network architecture. From this table, it can be concluded that it will take quite some time since such a national roaming feature may finally work in the network.

| | | | | | |
|---|---|---|---|---|---|
| Rel.-16 or < | Rel.-16 or < | | Rel.-16 or < | | Fails |
| Rel.-16 or > | Rel.-17 or > | | Rel.-16 or < | | Fails |
| Rel.-16 or > | Rel.-16 or < | | Rel.-17 or > | | Fails |
| Rel.-16 or > | Rel.-17 or > | | Rel.-17 or > | | Fails |
| Rel.-17 or > | Rel.-16 or < | | Rel.-16 or > | | Fails |
| Rel.-17 or > | Rel.-17 or > | | Rel.-16 or > | | Fails |
| Rel.-17 or > | Rel.-16 or < | | Rel.-17 or < | | Fails |
| Rel.-17 or > | Rel.-17 or > | SA (5 GC) | Rel.-17 or > | SA (5 GC) | Works if VPLMN and HPLMN are connected to 5GC and 5G radio, 5G SA or arch. option 7 |
| | | | ...... | | |
| Rel.-17 or > | Rel.-17 or > | NSA | Rel.-17 or > | SA | Fails |
| Rel.-17 or > | Rel.-17 or > | SA | Rel.-17 or > | NSA | Fails |

The current 3GPP specification addresses national roaming for >Rel.17. Otherwise this solution of disaster roaming is not applicable nor available.

Hence, an alternative solution being non-standard dependent is needed, being also available for legacy terminals regardless whether connected to LTE or NR and which architecture is used.

In addition, it needs to be considered that currently it is discussed that further conditions need to be fulfilled for the standardized method to work. Specifically, it is proposed in C1-221105, that the method is only applicable for countries which have exactly 2 PLMNs, to reduce signaling to one bit only.

It means that enabling a UE to determine that the disaster condition applies for the PLMN of the UE, using one bit in SIB, implies, considering the semantic of the disaster roaming indication, that it also indicates that there are only two PLMNs in the country of the available PLMN. It also implies that disaster condition applies to the PLMN in the country other than the available PLMN. Thus, if disaster is indicated, the UE is allowed to select to the one other PLMN existing in said country. Hence there may not be a standardized solution for countries, which have several PLMNs out of which only one may be in disaster condition. This is a huge restriction for the applicability of the standardized disaster roaming feature for many countries.

Further alternative and advantageous solutions would, accordingly, be desirable in the art.

### SUMMARY OF THE INVENTION

The present invention aims at avoiding the necessity for the UE and the PLMN to be compliant with Release above Release 17 to perform a national roaming in case of disaster situation.

The present invention is defined, in its broadest sense, as a method, for a user equipment previously connected to a base station of a Home PLMN where the user has a registration, to manage national roaming in disaster situation, said method comprising the steps of, for the user equipment, when an outage of the home PLMN is detected:
- scanning supported frequency domain to find an active base station, whatever is the PLMN,
- sending to a remote provisioning service server, using said active base station, a message comprising a bootstrapping credential with a disaster situation indication for being provisioned with credentials,
- receiving in return, from the remote provisioning service server, a temporary disaster identifier for a visitor national PLMN,
- using the temporary disaster identifier, connecting to the visitor national PLMN.

The invention thus proposes a national/disaster roaming supported by Remote Provisioning Service. This is especially useful for critical fields such as healthcare and offering related service while not waiting for years for the next standards generation being fully implemented.

With the method of the invention, the UE activates RPS provisioning in disaster mode and can thus approach forbidden networks if no other network is in reach or if the device has indication information available about disaster situation from other sources, typically broadcast source or user interface on emergency situation.

GSMA only addresses RPS as such, and does not cope with additions, and even less for disaster scenarios. The invention thus enables to offer a very useful service, which involve operators for disaster identifiers provisioning, consideration and processing. The invention uses a special RPS signaling and disaster situation evaluation.

The invention only involves a Remote Provisioning Service (RPS) and proposes a specialized procedure for national roaming, and even more for national roaming also to networks, which are not 5G SA.

The invention is not based on new standards and is, in the opposite, a change of the PLMN identity to be served by a new PLMN as HPLMN of the user is in disaster.

It is an originality of the invention to modify/suspend HPLMN or higher priority PLMN search. The invention only requires that the terminal supports Remote Provisioning Service when previous serving network is gone and that the RPS server has identities for "disaster" user re-location available.

The invention thus allows to support a functionality which is like "national roaming" as a 3GPP defined emergency functionality. However, the invention will also work for legacy devices, i.e. devices earlier than Rel.-17. Also, the user/device owner does not depend on the support of Rel.-17 in its own PLMN but also on Rel..-17 support on roaming/visited PLMN. The disaster RPS provisioning can be offered as a service.

Advantageously, the bootstrapping credential itself is a disaster situation indication.

This features implements bootstrapping credentials that are self-defined as disaster indication. Bootstrapping credentials in general are known. Thus, in most realized implementations, the UE has a pre-stored set of general acceptable bootstrapping identities. It picks one randomly when being in a situation for requesting credentials. The bootstrapping identity is released again once a new identity from the intended PLMN was received. If the pool of bootstrapping identities is large enough and selection is done randomly, the reuse is possible without problems or a larger risk of parallel usage. For the disaster scenario, a fraction of said identities could be used as so called disaster emergency identities. Thus, for legacy devices in the field and to have a clean split, it is an easy and reasonable choice to provide an additional set of bootstrapping identities, which are only used for identity provisioning in disaster situation. Hence when a device performs a credential service request because of being in a disaster situation, it choses one of those disaster identities which already clarifies the cause of the request, as their usage is bound to disaster scenario. Hence the RPS server can apply according means. The RPS can thus evaluate disaster situation if deemed necessary and provide identity accordingly. It is here noted that the newly allocated identity could also be out of a special pool of normal network identities being reserved for disaster scenarios on said network.

Advantageously, the message to the remote provisioning service server for being provisioned further comprises an information related to the location of the device.

This enables the RPS server, having previously received a disaster indication from a given PLMN, which is here the Home PLMN of the user equipment, to check if the UE is well in an area where a disaster has been declared. This add on basic functionality avoids misuse and enables to fit UE location to declared disaster area known by RPS server.

The information related to the location is, typically, a geographical position or a cell identity of previously serving base station.

According to another advantageous feature, the message to the remote provisioning service server further comprises an indication of the previously serving Home PLMN.

This enables the RPS server to choose a disaster identifier depending on the HPLMN of the UE to be provisioned. If several PLMN are in disaster, it also helps, at the end of the disaster situation for one of them, to know which are the identifiers to be discarded by the Visitor HPLMN.

Advantageously, said method comprises the further steps of:
- while connected to the visitor national PLMN, active or in idle mode, receiving a no more valid identifier indication, from the visitor national PLMN,
- attempting to reconnect to the registered Home PLMN.

This enables the UE to be aware of the end of the disaster by simply having a "no service available" indication or "a no valid identifier", to trigger a reconnection to its Home PLMN.

Advantageously, the method further comprises the step of, a lastly used identifier to connect to registered home PLMN having being stored, attempting to connect to the registered home PLMN using the lastly used identifier.

This storage of the lastly used identifier with the Home PLMN enables to save resources in terms of connectivity. At a time where the network recovers from a disaster situation, it can be very relevant.

The invention also relates to a user equipment of which the user has a registration at a Home PLMN and adapted to manage national roaming in disaster situation according to a method according one if the preceding claims, said user equipment having:
- a frequency scanning module to, when an outage of the home PLMN is detected, scan supported frequency domain to find an active base station, whatever is the PLMN,
- an EPS request module adapted to, when an outage of the home PLMN is detected, send to a remote provisioning service server, using said active base station, a message comprising a bootstrapping credential with a disaster situation indication for being provisioned with credentials,
- a transmission/reception module adapted to receive, in return, from the remote provisioning service server, a temporary disaster identifier for a visitor national PLMN,
- a connection module to connect to the visitor national PLMN.

Such a user equipment implementing the method of the invention has access to a national roaming even if it presents a compliance with legacy 3GPP standards as far as it can reach a RPS server. It is the case for any user equipment which has a bootstrapping identity. Otherwise the RPS server is an IP destination reachable by any user equipment which has an identity which can be used for initial access. The RPS server has an application which needs to be executed for the invention to be performed.

The invention also relates to a method, for a remote provisioning service server, to manage national roaming of users equipment registered at a registered Home PLMN in disaster situation, said method comprising the steps of,
- preliminarily receiving from other PLMN than Home PLMN and storing disaster temporary identifiers to be used in disaster situation, said disaster temporary identifiers being dedicated to a connection to a national Visitor PLMN,
- while receiving a message comprising a bootstrapping credential with a disaster situation indication for being provisioned, sending a disaster temporary identifier in answer.

This method enables an RPS server to provide to all disaster requests corresponding identities of a functioning network.

Advantageously, the message for being provisioned further comprising an information related to the location of the device, the method further comprises the steps of:
- checking that the location of the device corresponds to an area declared as in disaster situation,
- sending the temporary disaster identifier only send if a corresponding disaster situation has been declared.

With such a feature, an RPS server being informed on disaster situation in a given area can check the reality of the disaster before sending the disaster identities. A geographical location or a previous serving base station's identity can thus typically be used to evaluate disaster situation.

Advantageously, the disaster temporary identifiers to be used in disaster situation are range of identifiers defined by the national Visitor PLMN and intended for use as disaster temporary identifiers for users from other PLMNs.

This enables the national Visitor PLMN to know that the corresponding connected UE is a disaster roaming device.

Advantageously, the disaster temporary identifiers as stored are associated to the home PLMN to which a disaster roaming device belongs to, thus enabling the Visitor PLMN to selectively process the end of disaster situation depending on the concerned PLMN.

With such a feature, the provided identities are part of a per PLMN pool of identities to be used in disaster situations. Here identity pools are organized per PLMN and thus provides for each network corresponding disaster identities. The disaster identities for each PLMN acting as visitor PLMN are thus grouped according to the previous serving PLMN and this is useful to allow for organized returning after the disaster to the corresponding PLMN.

The invention at last relates to a remote provisioning service server adapted to manage national roaming of users equipment registered at a registered Home PLMN in disaster situation according to a method of the invention, said RPS server having:
- a memory adapted to store disaster temporary identifiers to be used in disaster situation, said disaster temporary identifier having been preliminarily received from other PLMN than Home PLMN and being dedicated to a connection to a national Visitor PLMN,
- a request processing module adapted to trigger a sending a disaster temporary identifier in answer while receiving a message comprising a bootstrapping credential with a disaster situation indication for being provisioned.

Such a remote provisioning service server is adapted to implement the invention and to support national roaming according to the invention in a very simple implementation, which does not require big changes in the infrastructures and in the user equipments.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

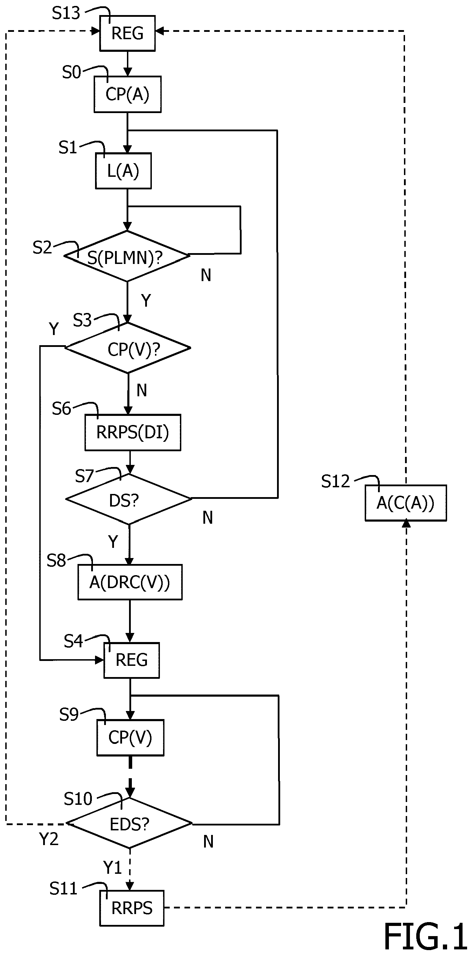

- Figure 1 is a flow chart which schematically illustrates the methods of the invention as implemented, on a first side, in a user equipment of the invention and, on the other side, on a remote provisioning service server of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

Figure 1 is a flow chart showing the two methods of the invention, one being implemented in a user equipment, UE in the following, and the other being implemented in a remote provisioning service server, RPS in the following.

In a preliminary step S0, the UE camps CP(A) on its Home PLMN A or a prior serving PLMN A. In a first step S1, the UE losts its contact with the HPLMN A.

Such a device which has lost L(A) its contact to the HPLMN or prior serving network A and which does not regain connectivity after a certain time, proceeds to a scanning S(PLMN) of the available frequencies and uses S(PLMN) all its capabilities to find a suitable/equivalent or allowed network or a network with acceptable service minimum service in a step S2. Such a suitable network presents camped normally state which could provide a service. So far no such suitable network is found (case N of step S2), the UE continues to search. When such a network V is found (case Y of step S3), it is verified CP(V) if the network V is indeed allowed for camping is verified in a step S3.

If yes (case Y of step S3), the UE registers REG on the found network V in step S4 and then camps CP(V) on V in a step S5.

If not (case N of step S3), the UE according to the invention considers that it is in disaster situation and performs an RPS call RRPS(DI) including disaster indication DI in a step S6. Conditions for disaster indication are out of scope of the invention.

The RPS call shall be done via the found network V, which is suitable partner for this disaster roaming. It is here noted that, in general, any network that is included in said disaster RPS process can be selected. The only prerequisite is, that the RPS is allowed to provision identities of said network also for the cause of disaster.

Remote Provisioning here designates the provisioning of an identity, which enables access for the UE to another network where the UE has currently no related identity of and hence cannot access otherwise. The process of provisioning can be referred to as described in EP3195623B1.

Said RPS service request RRPS(DI) comprises a disaster indication DI. Advantageously, it further contains an indication of the UE location, which can be a GPS position if available, or the base station identifier of the previous serving base station or the identifier of the newly approached base station of the roaming network.

A core network of the found network V then checks in a step S7, if a disaster situation DS is indeed referenced, especially on the given area. If no disaster situation DS are referenced (case N of step S7), the UE remains in the situation where it has lost the connection with PLMN A as illustrated by step S1.

In case the position indication complies with an area which was declared as national disaster area to the RPS server (case Y of step S7), in a step S8, the RPS server answers A(DRC(V)) to the UE by providing to the device a disaster roaming credential DRC(V), typically an identity to be used to connect to the new network V so that the device can regain service.

The device in this case is not really roaming but rather, by the change of subscription, changed to another visitor network V as new HPLMN and the UE can accordingly get a service and in any case, can camp CP(V) on the network V as illustrated in step S9.

The end of the disaster situation EDS is monitored, as illustrated in step S10. So far as no end of disaster situation EDS is detected (case N of step S10), the UE continues to camp on PLMN V.

With the invention, RPS roaming helps users in disaster situations and they send users back home after disaster situation has ended. It is advantageous that, to terminate said service provisioning once the disaster situation DS is clarified, the designated disaster roaming credential DRC(V) is from a special pool of identities assigned to devices in disaster roaming. The disaster roaming credentials are disaster temporary identifiers for the Visitor PLMN.

Hence, such devices can be limited and clearly identified. Thus, once the disaster scenario is solved, the now new HPLMN V may typically declare all those disaster roaming identities as invalid which will trigger a "UE not known in HLR" situation or a "no service allowed" situation, or using any other mean. In such situation, the UE thus receives a no more valid identifier indication and thus detect an end of disaster situation.

When an end of disaster situation EDS is detected, several possibilities can be applied as illustrated by at least two cases Y1 and Y2 for step S10.

After the disaster has ended and after the UE has received an end of disaster situation EDS indication, a "return home" is triggered.

In a first case Y1 of step S10, the UE has stored its previous identity and just activates that identity again to register in a step S13. In that case, no extra RPS would be necessary and this option has the advantage of resuming again same identity as previously prior the disaster.

In a second case Y2 of step S10, by receiving an end of disaster situation indication, which can thus be a detection of "UE not known in HLR" indication or a "no service allowed", the UE automatically starts again its PLMN search. It may again find the network, which was previous in disaster, or any other network. It performs in all cases an RPS request RRPS in a step S11. The RPS will then answer A(C(A)) in a step S12 by sending credentials C(A) to be used to register REG and connect to Home PLMN A in a step S13.

Thus, even when the currently new HPLMN would indeed not intend to support such a mechanism, the invention is a simple implementation using the existing and not requiring any standards changes. There can be alternative application based mechanism to stipulate an RPS request again. More precisely, the home server of the device could indicate that situation is normal again or, as in general possible, to request the device to perform another RPS request to change the operator. An initial provisioning but also a change of operator is a normal functionality set provided by RPS and can be executed at any time.

Advantageously, the device will be requested or indicated to perform another RPS request once disaster situation is overcame in a time staggered approach not to overload capacity and the recovering network.

The invention is thus an enhancement of the RPS process, which enables the device to attach to a different network, i.e. perform "national roaming" by operator change to a certain identity range reserved for such incidents by the RPS server for each operator.

Thus advantageously and in an original way, with the invention the RPS has different identity sets for each PLMN. It means that, depending on the previous serving PLMN, a special range of identities would be assigned to these UEs. Advantageously and in an original way, the identities are part of a nationwide pool for disaster situations so each operator could identify how many disaster roamers of other operators it supported for charging or for re-sending those i.e. terminating said service to force their PLMN transition.

Hence, there is a certain "per PLMN" control provided via the preconfigured pool of national disaster roaming identities. In addition this allows distribution of the disaster RPS roamers if more than one network is in disaster and more than one network will organize the service. It will avoid to overload a specific network.

Thus the RPS advantageously and in an original way, balances loads between the still operating networks, considering national roaming provisioning due to disaster. This is an extension of Steering of Roaming for Disaster scenarios meaning that the RPS disaster process can be used to equally balance the load over the remaining networks. Normal steering of roaming is done between the various networks of one operator. Here it is used as a load balancing between the remaining networks in disaster, as in such a situation, it is more important to ensure communication service i.e. this has higher priority than economic considerations.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method, for a user equipment previously connected to a base station of a Home PLMN where the user has a registration, to manage national roaming in disaster situation, said method comprising the steps of, for the user equipment, when an outage of the home PLMN is detected:
- scanning supported frequency domain to find an active base station, whatever is the PLMN,
- sending to a remote provisioning service server, using said active base station, a message comprising a bootstrapping credential with a disaster situation indication for being provisioned with credentials,
- receiving in return, from the remote provisioning service server, a temporary disaster identifier for a visitor national PLMN,
- using the temporary disaster identifier, connecting to the visitor national PLMN.

2. Method according to claim 1, wherein the bootstrapping credential itself is a disaster situation indication.

3. Method according to claim 1 or 2, wherein the message to the remote provisioning service server for being provisioned further comprises an information related to the location of the device.

4. Method according to claim 3, wherein the information related to the location is a geographical position or a cell identity of previously serving base station.

5. Method according to one of the preceding claims, wherein the message to the remote provisioning service server further comprises an indication of the previously serving Home PLMN.

6. Method according to one of the preceding claims, said method comprising the further steps of:
- while connected to the visitor national PLMN, active or in idle mode, receiving a no more valid identifier indication, from the visitor national PLMN,
- attempting to reconnect to the registered Home PLMN.

7. Method according to claim 6, said method further comprising the step of, a lastly used identifier to connect to registered home PLMN having being stored, attempting to connect to the registered home PLMN using the lastly used identifier.

8. User equipment of which the user has a registration at a Home PLMN and adapted to manage national roaming in disaster situation according to a method according one if the preceding claims, said user equipment having:
- a frequency scanning module to, when an outage of the home PLMN is detected, scan supported frequency domain to find an active base station, whatever is the PLMN,
- an EPS request module adapted to, when an outage of the home PLMN is detected, send to a remote provisioning service server, using said active base station, a message comprising a bootstrapping credential with a disaster situation indication for being provisioned with credentials,
- a transmission/reception module adapted to receive, in return, from the remote provisioning service server, a temporary disaster identifier for a visitor national PLMN,
- a connection module to connect to the visitor national PLMN.

9. Method, for a remote provisioning service server, to manage national roaming of users equipment registered at a registered Home PLMN in disaster situation, said method comprising the steps of,
- preliminarily receiving from other PLMN than Home PLMN and storing disaster temporary identifiers to be used in disaster situation, said disaster temporary identifiers being dedicated to a connection to a national Visitor PLMN,
- while receiving a message comprising a bootstrapping credential with a disaster situation indication for being provisioned, sending a disaster temporary identifier in answer.

10. Method according to claim 8, wherein, the message for being provisioned further comprising an information related to the location of the device, the method further comprises the steps of:
- checking that the location of the device corresponds to an area declared as in disaster situation,
- sending the temporary disaster identifier only send if a corresponding disaster situation has been declared.

11. Method according to one of claims 9 and 10, wherein the disaster temporary identifiers to be used in disaster situation are range of identifiers defined by the national Visitor PLMN and intended for use as disaster temporary identifiers for users from other PLMNs.

12. Method according to one of claims 9 to 11, wherein the disaster temporary identifiers as stored are associated to the home PLMN to which a disaster roaming device belongs to, thus enabling the Visitor PLMN to selectively process the end of disaster situation depending on the concerned PLMN.

13. Remote provisioning service server adapted to manage national roaming of users equipment registered at a registered Home PLMN in disaster situation according to a method as claimed in one of claims 9 to 12, said RPS server having:
- a memory adapted to store disaster temporary identifiers to be used in disaster situation, said disaster temporary identifier having been preliminarily received from other PLMN than Home PLMN and being dedicated to a connection to a national Visitor PLMN,
- a request processing module adapted to trigger a sending a disaster temporary identifier in answer while receiving a message comprising a bootstrapping credential with a disaster situation indication for being provisioned.
